# EUROPÄISCHE PATENTSCHRIFT

(11) **EP 1 832 089 B1**
(45) Veröffentlichungstag und Bekanntmachung des Hinweises auf die Patenterteilung: **23.04.2008**
(21) Anmeldenummer: 05815602.7
(22) Anmeldetag: 27.10.2005
(51) Int. Cl.: H04L 29/12, H04L 12/24, H04L 12/28, H04B 3/54

(54) **VERFAHREN UND SCHALTUNGSANORDNUNG ZUR AUSF]HRUNG VON INITIALISIERUNGS- BZW. REGISTRIERUNGSVORG[NGEN F]R EIN GER[T, INSBESONDERE EIN HAUSGER[T**
METHOD AND CIRCUIT ARRANGEMENT FOR CARRYING OUT INITIALISATION AND/OR REGISTRATION STEPS FOR A DEVICE, IN PARTICULAR A HOUSEHOLD APPLIANCE
PROCEDE ET ENSEMBLE CIRCUIT POUR EXECUTER DES OPERATIONS D'INITIALISATION OU D'ENREGISTREMENT D'UN APPAREIL, NOTAMMENT D'UN APPAREIL MENAGER

(30) Priorität: 22.12.2004 DE 102004061891
(43) Veröffentlichungstag der Anmeldung: 12.09.2007
(73) Patentinhaber: BSH Bosch und Siemens Hausgeräte GmbH, 81739 München (DE)
(72) Erfinder: BOSEN, Peter, 93161 Sinzing (DE); ENGL, Peter, 93146 Laaber (DE); KOBL, Bernhard, 93336 Sandersdorf (DE); SCHWEIER, Peter, 86735 Forheim (DE)
(86) Internationale Anmeldenummer: PCT/EP2005/055596
(87) Internationale Veröffentlichungsnummer: WO 2006/066991

(56) Entgegenhaltungen:
- EP-A- 0 466 152

## Beschreibung

Die Erfindung bezieht sich auf ein Verfahren und eine Schaltungsanordnung zur Ausführung von Initialisierungs- bzw. Registrierungsvorgängen für ein Gerät, insbesondere ein Hausgerät, das mit einem Netz verbindbar ist, in welchem eine erstmalige Initialisierung bzw. Registrierung des betreffenden Gerätes durch Abgabe eines Initialisierungssignals von dem genannten Gerät auf eine Betätigung einer mechanischen Schalteinrichtung hin mittels einer Steuereinrichtung gesteuert wird und in welchem im Zuge der betreffenden Initialisierung bzw. Registrierung diesem Gerät eine in dem genannten Netz dieses Gerät eindeutig bezeichnende Adresse zugewiesen wird.

Unter einem Initialisierungs- bzw. Registrierungsvorgang wird hier ein Vorgang verstanden, durch den ein Gerät, insbesondere ein Hausgerät zumindest veranlasst, dass ihm, nachdem es physikalisch an ein Netz angeschlossen ist, sodann eine eindeutige Adresse zugewiesen wird, unter der das betreffende Gerät danach in dem betreffenden Netz erreichbar ist.

Es sind bereits ein Verfahren und eine Schaltungsanordnung zur Anmeldung von Hausgeräten an einem durch ein Stromversorgungsnetz gebildeten Kommunikationsnetz bekannt (DE 691 05 375 T2). Bei dem betreffenden bekannten Verfahren und der zu dessen Durchführung vorgesehenen Schaltungsanordnung ist in jedem der an dem Stromversorgungsnetz angeschlossenen Hausgeräte ein bistabiles Schaltelement vorgesehen, welches in seiner EIN-Position eine Adressenzuweisung durch eine ebenfalls in dem Netz vorgesehene Steuereinrichtung veranlasst und welches in seiner AUS-Position diese Adressenanforderungsfunktion ausschaltet. Eine solche Adressenzuweisung erfolgt für das jeweilige Hausgerät nach dessen Installation. Dies bedeutet aber, dass bei einer erneuten Installation eines Gerätes nach zuvor erfolgter Trennung vom Netz, beispielsweise im Zuge einer Umstellung des betreffenden Hausgeräts in einem Haus oder einer Wohnung, die betreffende Adressenzuweisungsprozedur erneut für dieses Hausgerät durchgeführt wird. Eine solche erneute bzw. wiederholte Adressenzuweisungsprozedur ist an sich entbehrlich, da ja dem betreffenden Hausgerät bereits eine Adresse in dem Netz zugewiesen worden ist. Mit dem Ablauf jeder erneuten Adressenzuweisungsprozedur ist überdies eine an sich unerwünschte zusätzliche Belastung des genannten Netzes verbunden. Über eine Überprüfung eines Initialisierungs- bzw. Registrierungszustands eines am Netz gegebenenfalls wiederholt angeschlossenen oder angeschalteten Gerätes ist in diesem Zusammenhang indessen nichts näher bekannt.

Eine der gerade betrachteten bekannten Vorgehensweise entsprechende Vorgehensweise ist ebenfalls in einem Netz bekannt, das durch Stromverteilerleitungen gebildet ist, an denen verschiedene Hausgeräte angeschlossen sind (EP 0 320 390 B1). Bei diesem bekannten System wird im Falle von kurzzeitigen Stromausfällen oder Funktionsstörungen eine Neuinitialisierung des Systems durchgeführt. Über eine Überprüfung eines Initialisierungs- bzw. Registrierungszustands eines am Netz gegebenenfalls wiederholt angeschlossenen oder angeschalteten Gerätes ist jedoch auch in diesem Zusammenhang nichts näher bekannt.

Es ist ferner ein Verfahren zur Anmeldung eines Gerätes, und zwar insbesondere eines Hausgerätes in einem Netz bekannt (DE 689 07 885 T2), in welchem eine Überwachungseinrichtung jedem Gerät eine eigene Identität in Form einer entsprechenden Adresse zuzuweisen gestattet. Dabei wird so vorgegangen, dass bei der Installierung eines Gerätes eine Identitäts- bzw. Adressenzuweisungsprozedur auf einen Anschluss des betreffenden Gerätes an das Stromnetz automatisch ausgelöst wird. Dies heißt aber, dass auch hier auf jeden erneuten Anschluss oder auf jedes erneute Anschalten des jeweiligen Gerätes an das Stromnetz für dieses Gerät die genannte Identitäts- bzw. Adressenzuweisungsprozedur abläuft. Somit wird dem jeweiligen Gerät dadurch eine neue Adresse in dem Netz zugewiesen, mit dem das betreffende Gerät verbunden wird, obwohl diesem bereits eine Adresse in diesem Netz zugewiesen worden war. Im übrigen ist auch hier über eine Überprüfung eines Initialisierungs- bzw. Registrierungszustands eines am Netz gegebenenfalls wiederholt angeschlossenen oder angeschalteten Gerätes nichts näher bekannt.

Überdies ist auch schon ein Werkzeug zur Inbetriebnahme und zur Konfiguration von Komponenten eines Bussystems, wie Sensoren und Aktoren, welches sich mit dem jeweiligen Bussystem verbunden lässt, bekannt (DE 101 50 499 A1). Bei diesem bekannten Werkzeug, welches als Hardware-Controller ausgebildet ist, ist eine Erkennungseinrichtung zum automatischen Erkennen von nicht konfigurierten Komponenten im Konfigurationsmodus am Bussystem vorgesehen. Dadurch wird erkannt, ob Komponenten bereits konfiguriert sind, also eine Adresse besitzen, unter der sie über das Bussystem erreichbar sind. Unter nicht konfigurierten Komponenten werden in diesem Zusammenhang Komponenten verstanden, die gerade an das Bussystem angeschlossen oder wieder angeschlossen sind, also Komponenten, die sich unterscheiden von Komponenten, die schon bzw. noch an dem Bussystem angeschlossen sind. Damit erfolgt aber auch hier nach jeder Trennung einer Komponente von dem Bussystem und nach deren Wiederanschließen an dieses Bussystem eine erneute Adressierung und Parametrierung der betreffenden Komponente. Eine derartige erneute Adressierung und Parametrierung kann auch von Komponenten selbst erfolgen, die an dem Bussystem bereits vorhanden sind, indem eine bei ihnen jeweils vorhandene Lerntaste betätigt wird. Die Ausführung derartiger Maßnahmen ist an sich entbehrlich, wenn sich die Adressierung und Parametrierung der jeweiligen Komponente nach deren Trennung von dem Bussystem und einem erneuten Anschließen an das betreffende Bussystem nicht geändert haben. Über eine diesen Umstand Rechnung tragende Überprüfung eines Initialisierungs- bzw. Registrierungszustands eines am Netz gegebenenfalls wiederholt angeschlossenen oder angeschalteten Gerätes ist jedoch hier nichts näher bekannt.

Es sind schließlich auch schon ein Verfahren und eine Vorrichtung zum Steuern eines Hausgerätes bekannt (WO 02/41569 A2); dabei steht ein Hausgerät mit einem verteilten Netzwerk in Verbindung und empfängt von einem Dienstanbieter eine Steuerungsinformation über das Netzwerk. Diese Steuerungsinformation wird am Standort des Hausgerätes ausgewertet und/oder umgesetzt. Dabei wird eine individuelle Gerätenummer des jeweiligen Hausgerätes als Adresse innerhalb des Netzes genutzt. Diese Gerätenummer bzw. Adresse des jeweiligen Hausgerätes wird als eindeutiges Kennzeichen in dem jeweiligen Hausgerät intern abgelegt, beispielsweise in einem nicht-flüchtigen Speicherbaustein. Über Maßnahmen zur Vornahme einer Initialisierung bzw. Registrierung eines an einem Netz angeschlossenen Gerätes und zur Überprüfung dieser Initialisierung bzw. Registrierung, ist allerdings auch in diesem Zusammenhang nichts bekannt.

Der Erfindung liegt die Aufgabe zugrunde, einen Weg zu zeigen, wie auf relativ einfache Weise eine wiederholte Initialisierung bzw. Registrierung eines Gerätes, insbesondere eines Hausgerätes, in einem zumindest dieses Gerät enthaltenden Netz in dem Fall vermieden werden kann, dass das genannte Gerät nach erfolgter Initialisierung bzw. Registrierung von dem Netz weggenommen bzw. abgeschaltet und danach wieder an dieses Netz angeschlossen bzw. angeschaltet wird.

Gelöst wird die vorstehend aufgezeigte Aufgabe bei einem Verfahren der eingangs genannten Art erfindungsgemäß dadurch, dass nach der erstmaligen Initialisierung bzw. Registrierung des betreffenden Gerätes in einem diesem zugehörigen Merkspeicher ein dem Schaltzustand der genannten mechanischen Schalteinrichtung entsprechendes Einstellzustandssignal gespeichert wird, dass nach erfolgter Außerbetriebnahme und sodann erfolgender Wiederinbetriebsetzung des betreffenden Gerätes in dem genannten Netz der Einstellzustand der genannten mechanischen Schalteinrichtung mit dem Speicherzustand des gesonderten Merkspeichers entsprechend einer bestimmten Verknüpfungsfunktion verglichen wird und dass lediglich bei Feststellen des Vorliegens einer bestimmten festgelegten Verknüpfungsbeziehung zwischen dem Einstellzustand der mechanischen Schalteinrichtung des genannten Gerätes und dem Speicherzustand des gesonderten Merkspeichers eine erneute Initialisierung bzw. Registrierung des betreffenden Gerätes in dem genannten Netz erfolgt.

Durch die Überprüfung des Initialisierungs- bzw. Registrierungszustandes eines Gerätes, welches mit einem zumindest dieses Gerät enthaltenen Netz verbindbar ist, gemäß der vorliegenden Erfindung ergibt sich der Vorteil, dass eine erneute bzw. wiederholte Initialisierung und damit Registrierung des betreffenden Gerätes in dem genannten Netz dann nicht zu erfolgen braucht und auch nicht erfolgt, wenn nach einer erstmaligen Initialisierung und Registrierung dieses Gerätes und einer sodann erfolgenden Außerbetriebnahme dieses Gerätes und einer damit gegebenenfalls verbundenen Entfernung von dem Netz eine erneute Wiederinbetriebsetzung des betreffenden Gerätes in dem genannten Netz erfolgt. In diesem Netz ist dem betreffenden Gerät ja bereits eine eindeutige Adresse zugewiesen worden, die dieses Gerät auch weiterhin behalten kann und unter der dieses Gerät auch weiterhin in diesem Netz erreichbar ist. Die ansonsten mit der Wiederinbetriebnahme eines Gerätes in dem betreffenden Netz verbundene Adressenzuweisungsprozedur braucht in diesem Fall nicht nochmals ausgeführt zu werden, was zumindest eine Entlastung des betreffenden Netzes und der mit diesem verbundenen Steuereinrichtung bedeutet, welche die genannte Adressenzuweisung steuert und der ja die dem betreffenden Gerät zugewiesene Adresse kennt.

Vorzugsweise wird der jeweilige Einstellzustand der mechanischen Schalteinrichtung des genannten Gerätes mit dem Speicherzustand des gesonderten Merkspeichers entsprechend einer EXKLUSIV-ODER-Funktion (Antivalenz) oder entsprechend einer Äquivalenz-Funktion verglichen. Hierdurch ergibt sich der Vorteil eines besonders geringen Vergleichsaufwands.

Zweckmäßigerweise wird das von der mechanischen Schalteinrichtung des genannten Gerätes jeweils abgegebene Initialisierungssignal in einem von der Stromversorgung des betreffenden Gerätes unabhängigen nicht-flüchtigen Merkspeicher gespeichert. Hierdurch ergibt sich der Vorteil einer besonders sicheren Speicherung des jeweiligen Initialisierungs- bzw. Registrierungszustands eines Gerätes, insbesondere eines Hausgerätes.

In vorteilhafter Weise wird als Merkspeicher der gerade erwähnten Art ein von einer eigenen Stromquelle versorgter Speicher verwendet, insbesondere ein Halbleiterspeicher. Dies bringt einen besonders geringen Schaltungs- und Steuerungsaufwand hinsichtlich des Merkspeichers mit sich.

Alternativ dazu kann als Merkspeicher ein nicht-elektrisch speichernder Speicher verwendet werden, wie insbesondere ein magnetisch, optisch, magnetooptisch oder holografisch speichernder Speicher. Derartige Speicher sind in vorteilhafter Weise völlig unabhängig von irgendwelchen Stromversorgungen, um eine in ihnen einmal eingespeicherte Information festzuhalten.

Zur Durchführung des Verfahrens gemäß der Erfindung dient zweckmäßigerweise eine Schaltungsanordnung der eingangs genannten Art, wobei diese Schaltungsanordnung dadurch gekennzeichnet ist, dass in dem genannten Gerät eine in zumindest zwei unterschiedliche Schaltstellungen einstellbare mechanische Schalteinrichtung vorgesehen ist, die in ihren unterschiedlichen Schaltstellungen voneinander verschiedene Initialisierungssignale (z.B. "0" bzw. "1") abzugeben gestattet, dass für das genannte Gerät ein Merkspeicher zur Speicherung des durch Betätigen der genannten mechanischen Schalteinrichtung jeweils abgegebenen Initialisierungssignals vorgesehen ist, dass eine Vergleichseinrichtung vorgesehen ist, die den jeweiligen Einstellzustand der mechanischen Schalteinrichtung mit dem Speicherzustand des gesonderten Merkspeichers vor der Durchführung eines Initialisierungs- bzw. Registrierungsvorgangs für das betreffende Hausgerät entsprechend einer bestimmten Verknüpfungsfunktion auf eine Inbetriebsetzung und auf jede Wiederinbetriebsetzung des betreffenden Gerätes nach einer jeweiligen Betriebsunterbrechung zu vergleichen gestattet, und dass eine Auswerteeinrichtung vorgesehen ist, die lediglich bei Feststellen des Vorliegens einer bestimmten festgelegten Verknüpfungsbeziehung zwischen dem jeweiligen Einstellzustand der mechanischen Schalteinrichtung und dem Speicherzustand des gesonderten Merkspeichers eine erneute Initialisierung bzw. Registrierung des betreffenden Gerätes in dem genannten Netz auslöst.

Hierdurch ergibt sich der Vorteil eines besonders geringen schaltungstechnischen Aufwands, um den Initialisierungs- bzw. Registrierungszustand eines Gerätes, insbesondere eines Hausgerätes, in einem zumindest dieses Gerät enthaltenden Netz überprüfen zu können, an das das betreffende Gerät erstmalig oder wiederholt angeschlossen bzw. angeschaltet wird. Im Falle des erstmaligen Anschlusses bzw. Anschaltens des betreffenden Gerätes an das genannte Netz wird diesem Gerät eine eindeutige Adresse in diesem Netz zugewiesen. Nach einer Betriebsunterbrechung und der damit gegebenenfalls verbundenen Wegnahme des betreffenden Gerätes von dem Netz und dem anschließend wieder erfolgenden Anschließen bzw. Anschalten dieses Gerätes an das Netz braucht dem betreffenden Gerät in diesem Netz nicht erneut eine Adresse zugewiesen zu werden; vielmehr kann dieses Gerät weiterhin unter seiner Adresse arbeiten und erreicht werden, die ihm bereits bei einem früheren, insbesondere dem ersten Anschluss bzw. Anschalten an das Netz zugewiesen worden ist. Die erwähnte Adressenzuweisungsprozedur und die damit verbundene Belastung des Netzes können somit entfallen.

Vorzugsweise ist die Vergleichseinrichtung bei der Schaltungsanordnung gemäß der Erfindung eine eine EXKLUSIV-ODER-Funktion (Antivalenz) oder eine eine Äquivalenzfunktion ausführende Vergleichseinrichtung. Hierdurch ergibt sich der Vorteil eines besonders geringen schaltungstechnischen Aufwands für die Realisierung der Vergleichseinrichtung.

Zweckmäßigerweise ist der genannte Merkspeicher ein das jeweilige Initialisierungssignal speichernder, von der Stromversorgung des zugehörigen Gerätes unabhängiger nicht-flüchtiger Merkspeicher. Dadurch lässt sich in vorteilhafter Weise das jeweilige Initialisierungssignal besonders sicher festhalten.

Von Vorteil ist es, den betreffenden Merkspeicher durch einen mit einer eigenen Stromquelle versorgten Speicher, insbesondere durch einen Halbleiterspeicher zu bilden, was einen besonders geringen Schaltungs- und Steuerungsaufwand bedeutet.

Alternativ ist der betreffende Merkspeicher gemäß einer weiteren zweckmäßigen Weiterbildung der vorliegenden Erfindung ein nicht-elektrisch speichernder Speicher, insbesondere ein magnetisch, optisch, magnetooptisch oder holografisch speichernder Speicher. Hierdurch ergibt sich der Vorteil, dass für die permanente Speicherung des jeweiligen Initialisierungssignals ohne elektrische Energie ausgekommen werden kann.

Anhand von Zeichnungen wird die Erfindung nachstehend an einem Ausführungsbeispiel näher erläutert.
- Fig. 1: zeigt in einer schematischen Darstellung eine zu einem Netz gehörende Busleitungsanordnung, an der eine Mehrzahl von Hausgeräten angeschlossen ist und die über Übergangseinrichtungen mit Kommunikationsnetzen verbunden ist.
- Fig. 2: veranschaulicht in einem Ablaufdiagramm den Ablauf der Überprüfung eines Initialisierungs- bzw. Registrierungszustands eines Gerätes, und zwar insbesondere eines Hausgerätes bei der in Fig. 1 dargestellten Anordnung.

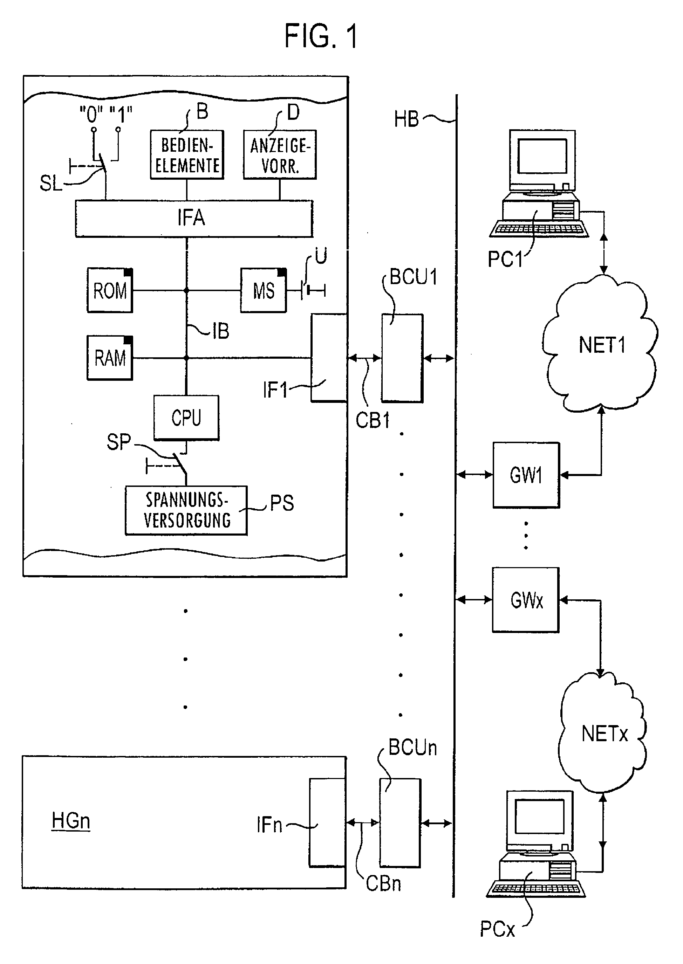

In Fig. 1 ist schematisch eine Mehrzahl von Hausgeräten HG1 bis HGn dargestellt, die über Kommunikationseinheiten darstellende Buskoppeleinheiten oder Buskoppler BCU1 bis BCUn an einer Busleitungsanordnung angeschlossen sind, welche zu einem Netz bzw. ersten Kommunikationsnetz gehört. Es sei hier angemerkt, dass die in Fig. 1 gezeigte Anordnung prinzipiell einer Anordnung entspricht, wie sie bereits in der DE-Patentanmeldung (entsprechend DE 103 13 360 A1) gezeigt und erläutert ist.

Das zuvor erwähnte erste Kommunikationsnetz ist über Übergangseinrichtungen GW1 bis GWx, auch Gateways genannt, und mit diesen verbundenen weiteren Kommunikationsnetzen NET1 bis NETx mit externen Steuerungs- und/oder Überwachungsgeräten PC1 bis PCx verbindbar.

Bei den in Fig. 1 angedeuteten Hausgeräten HG1 bis HGn handelt es sich beispielsweise um zu einem Haushalt oder zu mehreren Haushalten gehörende gleichartige und unterschiedliche Hausgeräte, wie beispielsweise um eine oder mehrere Waschmaschinen, um einen oder mehrere Elektroherde, um einen oder mehrere Geschirrspüler, um ein oder mehrere Mikrowellengeräte, um einen oder mehrere Kühlschränke, um eine oder mehrere Dunstabzugshauben, um eine oder mehrere Klimaanlagen, um eine oder mehrere Kaffeemaschinen, um einen oder mehrere Staubsauger, um eine oder mehrere Kochmulden, um einen oder mehrere Gefrierschränke, etc. Die betreffenden Hausgeräte HG1 bis HGn sind hier nicht im Einzelnen dargestellt. Vielmehr sind lediglich die für ein Verständnis der vorliegenden Erfindung notwendigen Elemente gezeigt, und zwar genauer gesagt lediglich für das Hausgerät HG1.

Zu den vorstehend erwähnten Elementen des Hausgerätes HG1 gehört unter anderem eine Zentraleinheit CPU, die an einem internen Bus IB angeschlossen ist, an dem ferner ein Festspeicher ROM und ein Schreib-Lese-Speicher RAM sowie über eine Hausgeräteinterne parallel oder seriell betriebene Schnittstelleneinrichtung IFA eine Anzeigeeinrichtung D und Bedienungselemente B angeschlossen sind. In dem Festspeicher ROM können für den Betrieb des Hausgerätes HG1 dienende Arbeitsprogramme gespeichert sein, die mit Hilfe der Zentraleinheit CPU ausführbar sind. Der Schreib-Lese-Speicher RAM dient im Zuge der Ausführung derartiger Arbeitsprogramme als Arbeitsspeicher des dargestellten Speichersystems. Die Zentraleinheit CPU kann hier zusammen mit den Speichern ROM und RAM noch zur Durchführung verschiedener Aufgaben, wie zur Durchführung von noch zu erläuternden Vergleichsvorgängen und Auswertevorgängen bei der Ausführung des Verfahrens gemäß der Erfindung herangezogen werden.

Die Zentraleinheit CPU ist über einen in Fig. 1 angedeuteten Schalter SP an einer Spannungsversorgungseinrichtung PS angeschlossen, die entweder die Spannungsversorgungseinrichtung des Hausgerätes HG1 sein kann, wie beispielsweise die Netzspannungsversorgungseinrichtung dieses Hausgerätes, oder die auch eine eigene bzw. gesonderte Spannungsversorgungseinrichtung dieses Hausgerätes HG1 sein kann. Im zuletzt erwähnten Falle steht diese Spannungsversorgungseinrichtung PS beispielsweise auch bei einem Ausfall der für den Betrieb des betreffenden Hausgerätes HG1 dienenden Versorgungs- bzw. Netzspannung noch zur Verfügung, um von dem dargestellten Hausgerät-internen Rechnersystem (CPU, ROM, RAM) bestimmte Zustands- bzw. Meldesignale für eine mögliche Fernabfrage bereitstellen zu können.

Mit dem internen Bus IB des Hausgerätes HG1, der eine mehrere Einzelleiter umfassende Busleitungsanordnung darstellt, ist im vorliegenden Fall noch eine Schnittstelleneinrichtung IF1 verbunden, die für Kommunikationsverbindungen zu und von dem betreffenden Hausgerät HG1 dient. Diese Schnittstelleneinrichtung IF1 kann beispielsweise eine serielle Schnittstelleneinrichtung oder eine parallele Schnittstelleneinrichtung sein, wie sie für die Datenübertragung üblicherweise eingesetzt wird. Über diese Schnittstelleneinrichtung IF1 kann beispielsweise die zuvor erwähnte Fernabfrage erfolgen.

Mit der zuvor erwähnten Schnittstelleneinrichtung IFA des Hausgeräts HG1 ist noch eine mechanische Schalteinrichtung SL verbunden, die gewöhnlich an nicht leicht erreichbarer Stelle im Hausgerät HG1 angeordnet ist (normalerweise nur für Service-Personal zugänglich). Die mechanische Schalteinrichtung SL ist in zumindest zwei unterschiedlichen Schaltstellungen einstellbar und sie ist im vorliegenden Fall auch lediglich in diesen zwei unterschiedlichen Schalteinstellungen einstellbar. In der einen Schaltstellung gibt diese sozusagen bistabile mechanische Schalteinrichtung SL, die beispielsweise durch einen Umschalter gebildet sein kann, ein einem Verknüpfungssignal bzw. Bit "0" entsprechendes Signal an die Schnittstelleneinrichtung IFA ab. In ihrer anderen Schaltstellung gibt die betreffende mechanische Schalteinrichtung SL ein einem Verknüpfungssignal bzw. Bit "1" entsprechendes Signal an die Schnittstelleneinrichtung IFA ab. Grundsätzlich kann die betreffende mechanische Schalteinrichtung SL aber auch unterschiedliche Adressensignale als voneinander verschiedene Signale entsprechend ihrer jeweiligen Einstellung an die Schnittstelleneinrichtung IFA abgeben. Die erwähnten unterschiedlichen Signale werden im Rahmen der vorliegenden Erfindung als Initialisierungssignale genutzt, durch deren Abgabe das betreffende Hausgerät HG1 in dem die Busleitungsanordnung HB umfassenden Netz registriert wird und durch die gegebenenfalls in dem betreffenden Hausgerät eine Grundeinstellung von verschiedenen Zuständen, insbesondere eine Adressenübernahme - also eine Initialisierung - erfolgt, worauf nachstehend noch näher eingegangen wird.

Die zuvor betrachtete mechanische Umschalteinrichtung SL ist hier in lediglich zwei stabile Schaltstellungen einstellbar. Es ist jedoch auch möglich, eine z.B. in drei unterschiedliche stabile Schaltstellungen einstellbare mechanische Schalteinrichtung vorzusehen. Eine solche Schalteinrichtung könnte in ihrer ersten Schaltstellung beispielsweise gar kein Signal oder ein eine Inbetriebsetzung des Hausgerätes blockierendes Sperrsignal und in ihren zweiten und dritten Schaltstellungen beispielsweise ein einem Binärsignal "0" entsprechendes Signal bzw. ein einem Binärsignal "1" entsprechendes Signal an die Schnittstelleneinrichtung IFA abgeben.

Mit dem zum Hausgerät HG1 gemäß Fig. 1 gehörenden internen Bus IB ist noch ein Merkspeicher MS verbunden, der im vorliegenden Fall ein von der Stromversorgung des Hausgerätes HG1 unabhängiger nicht-flüchtiger Merkspeicher ist, in welchem der jeweilige Einstellzustand der mechanischen Schalteinrichtung SL des Hausgerätes HG1 gespeichert wird. Dieser Merkspeicher MS ist im vorliegenden Fall ein elektrisch speichernder Halbleiterspeicher, der mit einer eigenen Stromquelle U, einer Stützbatterie verbunden ist, die den betreffenden Merkspeicher MS mit der zur Signalspeicherung erforderlichen Spannung versorgt. Der betreffende Merkspeicher MS kann jedoch auch durch einen nicht-elektrisch speichernden Speicher gebildet sein, wie durch einen magnetisch, optisch, magnetooptisch oder holografisch speichernden Speicher. In diesem Falle ist die in Fig. 1 dargestellte Stromquelle bzw. Stützbatterie U entbehrlich.

An dieser Stelle sei noch angemerkt, dass der zuvor betrachtete Merkspeicher MS nicht unbedingt in dem Hausgerät HG1 vorgesehen zu sein braucht; vielmehr kann er auch in Einrichtungen, wie in einem mit dem Hausgerät HG1 verbundenen Buskoppler BCU1, enthalten sein, der im Rahmen der vorliegenden Erfindung die Funktion einer Steuereinrichtung für das Hausgerät HG1 besitzt, wie dies nachstehend noch ersichtlich werden wird.

Zu dem in Fig. 1 schematisch angedeuteten Hausgerät HGn ist anzumerken, dass dieses schaltungsmäßig in gleicher Weise aufgebaut sein kann wie das zuvor betrachtete Hausgerät HG1. Das angedeutete Hausgerät HGn ist mit einer eigenen Schnittstelleneinrichtung IFn entsprechend der zuvor erwähnten Schnittstelleneinrichtung IF1 ausgestattet. Diese Schnittstelleneinrichtung IFn kann ebenfalls eine parallele oder serielle Schnittstelleneinrichtung sein.

Mit ihren Schnittstelleneinrichtungen IF1 und IFn sind die Hausgeräte HG1 bis HGn über in Fig. 1 als bidirektional betriebene Verbindungsleitungen dargestellte Anschlussleitungen CB1 bis CBn mit zugehörigen Buskopplern BCU1 bis BCUn verbunden. Über diese Buskoppler BCU1 bis BCUn sind die Hausgeräte HG1 bis HGn an dem ersten Kommunikationsnetz angeschlossen, welches in Fig. 1 durch ein eine einzige Busleitungsanordnung HB umfassendes leitungsgebundenes Kommunikationsnetz dargestellt ist, das über eine Vielzahl von Einzelleitungen verfügen kann. Die erwähnten Buskoppler BCU1 bis BCUn dienen hier unter anderem dazu, Hausgeräte-spezifische Protokolle bzw. Datenformate (also sogenannte proprietäre Protokolle) in Bus-einheitliche bzw. standardisierte Protokolle bzw. Datenformate umzusetzen, und umgekehrt dienen sie dazu, die in der Busleitungsanordnung HB benutzten Bus-einheitlichen bzw. standardisierten Protokolle bzw. Datenformate in Hausgeräte-spezifische Protokolle bzw. Datenformate für die einzelnen Hausgeräte umzusetzen. Damit sind hier für den Datenaustausch und das bustypische Netzwerkmanagement nicht die Hausgeräte HG1 bis HGn allein, sondern vor allem die Buskoppler BCU1 bis BCUn verantwortlich.

Die das vorstehend erwähnte erste Kommunikationsnetz bildende bzw. zu diesem gehörende Busleitungsanordnung HB kann in dem Fall, dass die Hausgeräte HG1 bis HGn sich beispielsweise in einem Haus oder in einander benachbarten Häusern befinden, ein sogenannter Haus- oder Heimbus sein, der für sämtliche in dem betreffenden Haus oder in den betreffenden Häusern vorhandenen Hausgeräte das erste Kommunikationsnetz bildet.

An dieser Stelle sei darauf hingewiesen, dass das erste Kommunikationsnetz (HB) auch ein leitungsgebundenes Kommunikationsnetz sein kann, dessen Kommunikationsleitungen durch von einer Netzspannungsquelle gespeiste Strom- bzw. Spannungsversorgungsleitungen der einzelnen Hausgeräte gebildet sind. Dies heißt, dass in diesem Falle die Kommunikationen zwischen den Buskopplern BCU1 bis BCUn und Übergangseinrichtungen bzw. Gateways über Strom- bzw. Spannungsversorgungsleitungen der einzelnen Hausgeräte verlaufen, welche mit den betreffenden Buskopplern BCU1 bis BCUn und den erwähnten Übergangseinrichtungen bzw. Gateways verbunden sind.

Im übrigen kann das erste Kommunikationsnetz (HB) auch als Funknetz betrieben sein, in welchem die einzelnen Hausgeräte mittels Sende-Empfangs-Einrichtungen kommunizieren, die dann die Funktionen der betreffenden Buskoppler BCU1 bis BCUn erfüllen.

Mit der beim Ausführungsbeispiel gemäß Fig. 1 das erste Kommunikationsnetz bildenden Busleitungsanordnung HB sind Übergangseinrichtungen bzw. Gateways GW1 bis GWx verbunden, über die das betreffende erste Kommunikationsnetz mit weiteren Kommunikationsnetzen NET1 bis NETx verbunden ist. Bei diesen weiteren Kommunikationsnetzen NET1 bis NETx kann es sich vorzugsweise um ein öffentliches Kommunikationsnetz bzw. um das Internet handeln. Mit den betreffenden weiteren Kommunikationsnetzen NET1 bis NETx sind, wie in Fig. 1 angedeutet, externe Steuerungs- und/oder Überwachungsgeräte verbunden, welche beispielsweise durch Personalcomputer PC1 bis PCx gebildet sein können.

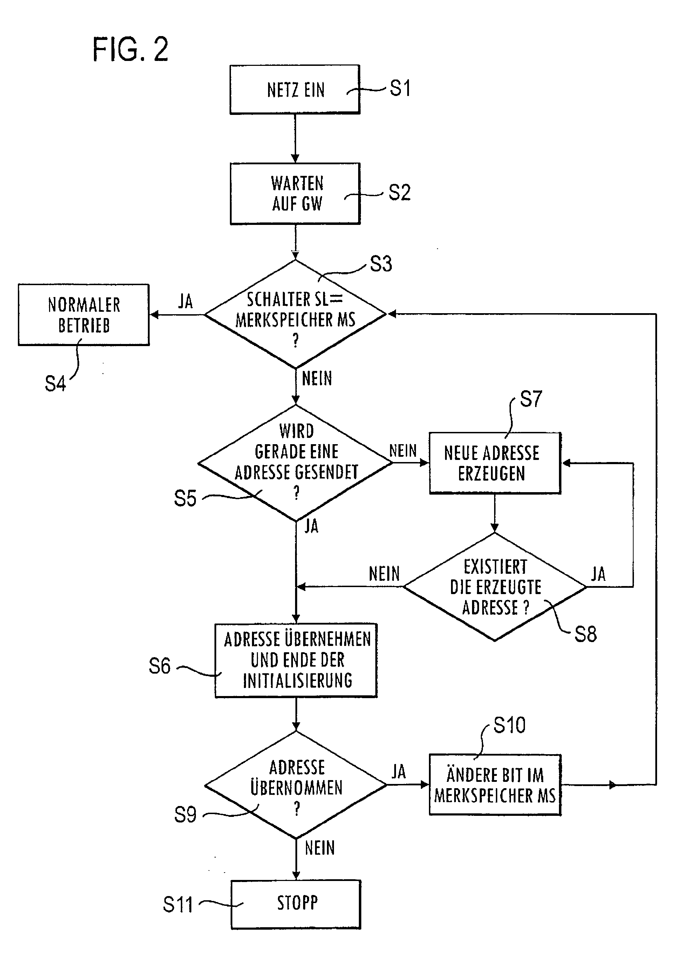

Nachdem zuvor der Aufbau der in Fig. 1 dargestellten Vorrichtung bzw. Schaltungsanordnung in dem für ein Verständnis der vorliegenden Erfindung erforderlichen Umfange erläutert worden ist, wird nunmehr unter Bezugnahme auf das in Fig. 2 dargestellte Ablaufdiagramm das Verfahren gemäß der vorliegenden Erfindung näher erläutert. Dazu wird auf die in Fig. 1 dargestellte Ausbildung des Hausgerätes HG1 Bezug genommen.

Zunächst wird der Fall betrachtet, dass eines der in Fig. 1 dargestellten Hausgeräte, und zwar das Hausgerät HG1 mit dem ihm zugeordneten Buskoppler BCU1 erstmals verbunden wird. Dabei läuft eine Initialisierungs- bzw. Registrierungsphase zur Initialisierung und Registrierung des betreffenden Hausgerätes HG1 ab, mit dem zumindest in dem Netz (HB) dieses Hausgerät HG1 verbindbar ist.

Diese Initialisierungs- und Registrierungsphase wird dadurch ausgelöst, dass in dem Hausgerät HG1 entsprechend dem Schritt S1 des Ablaufdiagramms gemäß Fig. 2 die Spannungsversorgungseinrichtung PS des Hausgerätes HG1 (Netz ein) eingeschaltet wird und dass gleichzeitig oder zuvor oder anschließend damit die in dem Hausgerät HG1 in Fig. 1 dargestellte bistabile Schalteinrichtung SL1 aus ihrer in der Zeichnung dargestellten Stellung, in der sie ein einem Binärsignal bzw. Bit "0" entsprechendes Signal der Schnittstelleneinrichtung IFA zuführt, in ihre andere Schaltstellung umgeschaltet wird, in der sie ein einem Binärsignal bzw. Bit "1" entsprechendes Signal der Schnittstelleneinrichtung IFA zuführt. Wie bereits oben im Zusammenhang mit der Erläuterung des Aufbaus des Hausgerätes HG1 ausgeführt, können anstelle der gerade erwähnten Binärsignale auch Adressensignale über die Schalteinrichtung SL an die Schnittstelleneinrichtung IFA geliefert werden.

Sodann wird beim anschließenden Schritt S2 geprüft, ob eine Übergangseinrichtung bzw. ein Gateway GW1 bis GWx für das betreffende Hausgerät HG1 verfügbar ist (Warten auf GW). Ist ein solches Gateway, wie beispielsweise das Gateway GW1 verfügbar, so geht der Verfahrensablauf weiter zum Schritt S3. Grundsätzlich könnte hier auch geprüft werden, ob ein Buskoppler für das betreffende Hausgerät verfügbar ist.

Beim Schritt S3 wird entsprechend einer bestimmten Verknüpfungsfunktion überprüft, beispielsweise durch das Hausgerät HG1 selbst - und zwar hier per Software durch die Zentraleinheit CPU und den Speichern ROM und RAM - ob der Schalter bzw. die Schalteinrichtung SL das gleiche Signal liefert wie der zugehörige Merkspeicher MS. Dies ist hier nicht der Fall, da im Merkspeicher MS, der sich noch in seinem Ausgangszustand befindet, annahmegemäß ein Binärsignal "0" gespeichert ist, während von der Schalteinrichtung SL ein Binärsignal "1" abgegeben wird. Damit geht der Verfahrensablauf hier vom Schritt S3 weiter zum Schritt S5. Bei diesem Schritt S5 wird überprüft, ob von dem dem Hausgerät HG1 als Steuereinrichtung zugehörigen Buskoppler BCU1 gerade eine Adresse, nämlich eine Hausadresse gesendet wird. Ist dies der Fall, weil bereits eine Initialisierungs- bzw. Registrierungsphase läuft, geht der Verfahrensablauf weiter zum Schritt S6, bei dem die betreffende Adresse bzw. Hausadresse für das Hausgerät HG1 im Buskoppler BCU1 und überdies vom Hausgerät HG1 übernommen wird und die Initialisierung beendet wird.

Wird indessen von dem Buskoppler BCU1 gerade keine Adresse gesendet, so geht der Verfahrensablauf vom Schritt S5 weiter zum Schritt S7, durch den der Buskoppler BCU1 veranlasst wird, eine neue Adresse zu erzeugen. Auf die Erzeugung einer neuen Adresse hin wird beim Schritt S8 sodann überprüft, ob diese erzeugte Adresse bereits existiert, also einem anderen mit der Busleitungsanordnung bzw. dem Hausbus HB verbundenen Hausgerät bereits zugewiesen worden ist. Ist dies der Fall, so wird der betreffende Buskoppler BCU1 veranlasst, eine weitere neue Adresse zu erzeugen. Dieser Vorgang läuft solange ab, bis schließlich beim Schritt S8 festgestellt wird, dass die durch den Buskoppler BCU1 erzeugte Adresse für kein anderes mit der Busleitungsanordnung bzw. dem Hausbus HB verbundenes Hausgerät verwendet ist. Sodann geht der Verfahrensablauf in diesem Fall zu dem bereits erwähnten Schritt S6 über. Nach der Beendigung der Initialisierungsphase gemäß dem Schritt S6 wird sodann beim anschließenden Schritt S9 überprüft, ob die von dem Buskoppler BCU1 erzeugte Adresse in dem Hausgerät HG1 übernommen worden ist oder nicht. Wird sie übernommen, so geht der Verfahrensablauf weiter zum Schritt S10, bei dem im vorliegenden Fall das im Merkspeicher MS gespeicherte Bit geändert wird, also vom Bit "0" in ein Bit "1 ".

Wird beim Schritt S9 festgestellt, dass die von dem Buskoppler BCU1 erzeugte Adresse im Hausgerät HG1 nicht übernommen worden ist, so erfolgt beim anschließenden Schritt S11 eine Stillsetzung durch Abgabe eines Stopp-Befehls. In diesem Fall muss überprüft werden, warum die Adressenübernahme nicht erfolgt ist.

Wenn nun das Hausgerät HG1 vom Netz genommen bzw. dessen Spannungsversorgungseinrichtung PS ausgeschaltet wird und wenn das betreffende Hausgerät HG1 zu einem Zeitpunkt danach wieder ans Netz angeschlossen bzw. seine Spannungsversorgung wieder eingeschaltet wird (Netz ein), ohne dass die Schalteinrichtung SL dieses Hausgerätes HG1 betätigt worden ist, so laufen gemäß dem in Fig. 2 dargestellten Verfahrensablauf zunächst erneut die Schritte S1, S2 und S3 ab. Da nunmehr beim Schritt S3 festgestellt wird, dass im Merkspeicher MS bereits ein Binärsignal "1" gespeichert ist und dass von der Schalteinrichtung SL ein Binärsignal "1" bereitgestellt wird, geht der Verfahrensablauf jedoch jetzt weiter zum Schritt S4. Dies bedeutet, dass ein normaler Betrieb vorliegt und dass die Verfahrensschritte S5 bis S11 nicht ausgeführt zu werden brauchen. In diesem Fall wird also keine erneute Initialisierungs- bzw. Registrierungsphase ausgeführt.

Ist die Schalteinrichtung SL indessen vor dem erneuten Wiederanschließen des Hausgerätes HG1 an das Netz bzw. vor dem erneuten Wiedereinschalten der Spannungsversorgung für das Hausgerät HG1 umgeschaltet worden, also in ihre in Fig. 1 gezeigte Schaltstellung gebracht worden, so läuft wieder eine entsprechende Initialisierungs- bzw. Registrierungsphase für dieses Hausgerät HG1 ab, wie sie bezüglich der ersten Inbetriebnahme dieses Hausgerätes HG1 oben erläutert worden ist.

Durch die vorstehend erläuterten Verfahrensabläufe wird also jeweils lediglich bei Feststellen des Vorliegens einer bestimmten Verknüpfungsbeziehung, und zwar genauer gesagt bei Feststellen des Vorliegens einer Abweichung zwischen dem Einstellzustand der mechanischen Schalteinrichtung SL des genannten Hausgeräts HG1 und dem Speicherzustand des zugehörigen Merkspeicher MS eine Initialisierung und damit Registrierung des betreffenden Hausgeräts HG1 in dem die Busleitungsanordnung bzw. den Hausbus HB umfassenden Netz vorgenommen. Diese Feststellung des Vorliegens einer Abweichung zwischen dem Einstellzustand der mechanischen Schalteinrichtung SL des Hausgerätes HG1 und dem Speicherzustand des zugehörigen Merkspeichers MS erfolgt hier vorzugsweise entsprechend einer EXKLUSIV-ODER-Funktion, also entsprechend einer Antivalenz-Funktion. Die Verknüpfungstabelle einer solchen EXKLUSIV-ODER-Funktion für zwei binäre Eingangssignale sieht wie folgt aus:

| | | | | |
|---|---|---|---|---|
| a | 0 | 1 | 0 | 1 |
| b | 0 | 0 | 1 | 1 |
| Q | 0 | 1 | 1 | 0 |

Hier bedeuten a und b die der EXKLUSIV-ODER-Funktion zu unterziehenden Eingangssignalbits, also zum einen von der mechanischen Schalteinrichtung SL und zum anderen von dem Merkspeicher MS. Mit Q ist das jeweilige Ausgangssignalbit der EXKLUSIV-ODER-Funktion angegeben.

Wie ersichtlich, werden Ausgangssignalbits "0" durch die betreffende EXKLUSIV-ODER-Funktion lediglich bei Vorliegen von übereinstimmenden Eingangssignalen bzw. Bits ("0", "0" und "1", "1") abgegeben, was beim Schritt S3 gemäß Fig. 2 einem Ausgangssignal "JA" entspricht. In den beiden anderen Fällen des Vorliegens von unterschiedlichen Eingangssignalen bzw. -bits ("0", "1" und "1 ", "0") für die EXKLUSIV-ODER-Funktion werden Ausgangssignale bzw. -bits "1" abgegeben, was einem NEIN-Ausgangssignal beim Schritt S3 gemäß Fig. 2 entspricht.

An dieser Stelle sei angemerkt, dass der Vergleich des jeweiligen Einstellzustands der erwähnten mechanischen Schalteinrichtung SL des Hausgeräts HG1 mit dem Speicherzustand des zugehörigen Merkspeichers MS dieses Hausgeräts HG1 auch entsprechend einer anderen Verknüpfungsfunktion verglichen werden kann, wie beispielsweise entsprechend einer Äquivalenz-Funktion. Nachdem die Äquivalenz-Funktion und die Antivalenz- bzw. EXKLUSIV-ODER-Funktion hinsichtlich der Abgabe der Verknüpfungs-Ausgangssignale zueinander komplementär sind, entspricht bei der Durchführung einer Äquivalenz-Funktion deren Ausgangssignal bzw. -bit "1" beim Schritt S3 gemäß Fig. 2 einer "JA"-Antwort, während ein Verknüpfungssignal bzw. -bit "0" in diesem Falle einer "NEIN"-Antwort beim Schritt S3 gemäß Fig. 2 entsprechen würde.

Prinzipiell könnte hier anstelle eines Vergleichs von Bits auch mit einem Vergleich von unterschiedlichen Adressensignalen gearbeitet werden, die von der mechanischen Schalteinrichtung SL des Hausgeräts HG1 abgegeben werden und die jeweils im zugehörigen Merkspeicher MS gespeichert werden können. Auch der Vergleich derartiger Adressensignale kann entsprechend einer EXKLUSIV-ODER-Funktion (Antivalenz) oder entsprechend einer Äquivalenz-Funktion erfolgen.

Abschließend sei noch angemerkt, dass die im Zusammenhang mit dem Schritt S3 in dem in Fig. 2 dargestellten Ablaufdiagramm durchgeführte Überprüfung entsprechend einer bestimmten Verknüpfungsfunktion gegebenenfalls nicht im jeweiligen Hausgerät, sondern an anderer Stelle, beispielsweise in dem dem jeweiligen Hausgerät zugehörigen Buskoppler ausgeführt wird. Überdies kann die jeweilige bestimmte Verknüpfungsfunktion nicht nur softwaremäßig, sondern auch hardwaremäßig ausgeführt sein.

### Bezugszeichenliste

- B: Bedienelemente
- BCU1, BCUn: Buskoppeleinheit, Buskoppler
- CB1, CBn: Anschlussleitungen
- CPU: Zentraleinheit
- D: Anzeigeeinrichtung
- GW: Gateway
- GW1, GWx: Übergangseinrichtung, Gateway
- HB: Busleitungsanordnung, Heim- bzw. Hausbus
- HG1, HGn: Gerät, Hausgerät
- IB: interner Bus
- IF1, IFn: Schnittstelleneinrichtung
- IFA: Schnittstelleneinrichtung
- MS: Merkspeicher
- NET1, NETx: Kommunikationsnetze
- PC1, PCx: Steuerungs-/Überwachungsgerät, Personalcomputer
- PS: Spannungsversorgungseinrichtung
- RAM: Schreib-Lese-Speicher
- ROM: Festspeicher
- S1, S2, S3, S4, S5, S6, S7, S8, S9, S10, S11: Schritt
- SL: mechanische Schalteinrichtung, Schalter
- SP: Schalter
- U: Stromquelle, Stützbatterie

## Patentansprüche

1. Verfahren zur Ausführung von Initialisierungs- bzw. Registrierungsvorgängen für ein Gerät, insbesondere ein Hausgerät, das mit einem Netz verbindbar ist, in welchem eine erstmalige Initialisierung bzw. Registrierung des betreffenden Gerätes durch Abgabe eines Initialisierungssignals von dem genannten Gerät auf eine Betätigung einer mechanischen Schalteinrichtung hin mittels einer Steuereinrichtung gesteuert wird und in welchem im Zuge der betreffenden Initialisierung bzw. Registrierung diesem Gerät eine in dem genannten Netz dieses Gerät eindeutig bezeichnende Adresse zugewiesen wird, **dadurch gekennzeichnet, dass** nach der erstmaligen Initialisierung bzw. Registrierung des betreffenden Gerätes (HG1) in einem diesem zugehörigen Merkspeicher (MS) ein dem Schaltzustand der in jeweils eine von zumindest zwei stabilen Schaltstellungen einstellbaren mechanischen Schalteinrichtung (SL) entsprechendes Einstellzustandssignal gespeichert wird, dass nach erfolgter Außerbetriebnahme und sodann erfolgender Wiederinbetriebsetzung des betreffenden Gerätes (HG1) in dem genannten Netz (HB) eine Überprüfung des Initialisierungs- bzw. Registrierungszustands des betreffenden Gerätes (HG) **dadurch** erfolgt, dass der Einstellzustand der genannten mechanischen Schalteinrichtung (SL) mit dem Speicherzustand des gesonderten Merkspeichers (MS) entsprechend einer bestimmten Verknüpfungsfunktion verglichen wird und dass lediglich bei Feststellen des Vorliegens einer bestimmten festgelegten Verknüpfungsbeziehung zwischen dem Einstellzustand der mechanischen Schalteinrichtung (SL) des genannten Gerätes (HG1) und dem Speicherzustand des gesonderten Merkspeichers (MS) eine erneute Initialisierung bzw. Registrierung des betreffenden Gerätes (HG1) in dem genannten Netz (HB) erfolgt.

2. Verfahren nach Anspruch 1, **dadurch gekennzeichnet, dass** der jeweilige Einstellzustand der mechanischen Schalteinrichtung (SL) des genannten Gerätes (HG1) mit dem Speicherzustand des gesonderten Merkspeichers (MS) entsprechend einer EXKLUSIV-ODER-Funktion (Antivalenz) oder entsprechend einer Äquivalenz-Funktion verglichen wird.

3. Verfahren nach Anspruch 1 oder 2, **dadurch gekennzeichnet, dass** das von der mechanischen Schalteinrichtung (SL) des genannten Gerätes (HG1) jeweils abgegebene Initialisierungssignal in einem von der Stromversorgung des betreffenden Gerätes (HG1) unabhängigen nicht-flüchtigen Merkspeicher (MS) gespeichert wird.

4. Verfahren nach Anspruch 3, **dadurch gekennzeichnet, dass** als Merkspeicher (MS) ein von einer eigenen Stromquelle (U) versorgter Speicher, insbesondere ein Halbleiterspeicher (MS) verwendet wird.

5. Verfahren nach Anspruch 3, **dadurch gekennzeichnet, dass** als Merkspeicher (MS) ein nicht-elektrisch speichernder Speicher, insbesondere ein magnetisch, optisch, magnetooptisch oder holografisch speichernder Speicher verwendet wird.

6. Schaltungsanordnung zur Durchführung des Verfahrens nach einem der Ansprüche 1 bis 5 für Ausführung von Initialisierungs- bzw. Registrierungsvorgängen für ein Gerät, insbesondere ein Hausgerät, das mit einem Netz verbindbar ist, in welchem eine erstmalige Initialisierung bzw. Registrierung des betreffenden Gerätes durch Abgabe eines Initialisierungssignals von dem genannten Gerät auf eine Betätigung einer mechanischen Schalteinrichtung hin mittels einer Steuereinrichtung gesteuert wird und in welchem im Zuge der betreffenden Initialisierung bzw. Registrierung diesem Gerät eine in dem genannten Netz dieses Gerät eindeutig bezeichnende Adresse zugewiesen wird, **dadurch gekennzeichnet, dass** in dem genannten Gerät (HG1) eine in zumindest zwei unterschiedliche stabile Schaltstellungen einstellbare mechanische Schalteinrichtung (SL) vorgesehen ist, die in ihren unterschiedlichen Schaltstellungen voneinander verschiedene Initialisierungssignale (z.B. "0" bzw. "1") abzugeben gestattet, dass für das genannte Gerät (HG1) ein Merkspeicher (MS) zur Speicherung des durch Betätigen der genannten mechanischen Schalteinrichtung (SL) jeweils abgegebenen Initialisierungssignals vorgesehen ist, dass eine eine Überprüfung des Initialisierungs- bzw. Registrierungszustands des betreffenden Gerätes (HG) vornehmende Vergleichseinrichtung (CPU, ROM, RAM) vorgesehen ist, die den jeweiligen Einstellzustand der mechanischen Schalteinrichtung (SL) mit dem Speicherzustand des gesonderten Merkspeichers (MS) vor der Durchführung eines Initialisierungs- bzw. Registrierungsvorgangs für das betreffende Gerät (HG1) entsprechend einer bestimmten Verknüpfungsfunktion auf eine Inbetriebnahme und auf jede Wiederinbetriebnahme des betreffenden Gerätes (HG1) nach einer jeweiligen Betriebsunterbrechung zu vergleichen gestattet, und dass eine Auswerteeinrichtung (CPU, ROM, RAM) vorgesehen ist, die lediglich bei Feststellen einer bestimmten festgelegten Verknüpfungsbeziehung zwischen dem jeweiligen Einstellzustand der mechanischen Schalteinrichtung (SL) und dem Speicherzustand des gesonderten Merkspeichers (MS) eine erneute Initialisierung bzw. Registrierung des betreffenden Gerätes (HG1) in dem genannten Netz (HB) auslöst.

7. Schaltungsanordnung nach Anspruch 6, **dadurch gekennzeichnet, dass** die Vergleichseinrichtung (CPU, ROM, RAM) eine eine EXKLUSIV-ODER-Funktion ausführende (Antivalenz) oder eine eine Äquivalenz-Funktion ausführende Vergleichseinrichtung ist.

8. Schaltungsanordnung nach Anspruch 6 oder 7, **dadurch gekennzeichnet, dass** der genannte Merkspeicher (MS) durch einen für die Speicherung eines Initialisierungssignals von der Stromversorgung (PS) des zugehörigen Gerätes (HG1) unabhängiger nicht-flüchtiger Merkspeicher (MS) ist.

9. Schaltungsanordnung nach Anspruch 7, **dadurch gekennzeichnet, dass** der Merkspeicher (MS) ein mit einer eigenen Stromquelle (U) versorgter Speicher, insbesondere ein Halbleiterspeicher (MS) ist.

10. Schaltungsanordnung nach Anspruch 7, **dadurch gekennzeichnet, dass** der Merkspeicher (MS) ein nicht-elektrisch speichernder Speicher, insbesondere ein magnetisch, optisch, magnetooptisch oder holografisch speichernder Speicher ist.

## Claims

1. Method of executing initialisation or registration processes for an appliance, particularly a domestic appliance, which is connectible with a network, in which an initial initialisation or registration of the relevant appliance is controlled by means of a control device by output of an initialisation signal from the said appliance on actuation of a mechanical switching device and in which in the course of the respective initialisation or registration this appliance is allocated an address uniquely denoting this appliance in the said network, **characterised in that** after the initial initialisation or registration of the relevant appliance (HG1) a setting state signal corresponding with the switching state of the mechanical switching device (SL), which is settable in a respective one of at least two stable switch settings, is stored in a marker memory (MS) associated with the appliance, that after the relevant appliance (HG1) has been taken out of operation and then placed back in operation a check of the initialisation or registration state of the relevant appliance (HG) is carried out in the said network (HB) in such a manner that the setting state of the said mechanical switching device (SL) is compared with the memory state of the separate marker memory (MS) in correspondence with a specific linking function and that a fresh initialisation or registration of the relevant appliance (HG1) in the said network (HB) is carried out only if the presence of a specific linking relationship between the setting state of the mechanical switching device (SL) of the said appliance (HG1) and the memory state of the separate marker memory (MS) is detected.

2. Method according to claim 1, **characterised in that** the respective setting state of the mechanical switching device (SL) of the said appliance (HG1) is compared with the memory state of the separate marker memory (MS) in correspondence with an EXCLUSIVE/OR function (anti-equivalence) or in correspondence with an equivalence function.

3. Method according to claim 1 or 2, **characterised in that** the initialisation signal delivered in each instance by the mechanical switching device (SL) of the said appliance (HG1) is stored in a non-volatile marker memory (MS) independent of the power supply of the relevant appliance (HG1).

4. Method according to claim 3, **characterised in that** a memory, particularly a semiconductor memory (MS), supplied by an own power source (U) is used as marker memory (MS).

5. Method according to claim 3, **characterised in that** a memory storing in non-electrical manner, particularly a memory storing magnetically, optically, magneto-optically or holographically, is used as marker memory (MS).

6. Circuit arrangement for carrying out the method according to one of claims 1 to 5 for execution of initialisation of registration processes for an appliance, particularly a domestic appliance, which is connectible with a network, in which an initial initialisation or registration of the relevant appliance is controlled by means of a control device by output of an initialisation signal by the said appliance on actuation a mechanical switching device and in which an address uniquely denoting this appliance in the said network is allocated in the course of the respective initialisation or registration of this appliance, **characterised in that** in the said appliance (HG1) there is provided a mechanical switching device (SL), which is settable in at least two different stable switch settings and which in its different switch settings allows delivery of initialisation signals (for example "0" or "1") different from one another, that a marker memory (MS) for storage of the initialisation signal respectively delivered by actuation of the said mechanical switching device (SL) is provided for the said appliance (HG1), that a comparison device (CPU, ROM, RAM) undertaking a check of the initialisation or registration state of the relevant appliance (HG) is provided and, prior to undertaking an initialisation or registration process for the relevant appliance (HG1), permits comparison of the respective setting state of the mechanical switching device (SL) with the memory state of the separate marker memory (MS) in correspondence with a specific linking function when the relevant appliance (HG1) is placed in operation and on each occasion it is returned to operation after a respective interruption in operation, and that an evaluating device (CPU, ROM, RAM) is provided which triggers a fresh initialisation or registration of the relevant appliance (HG1) in the said network (HB) only if a specific fixed linking relationship between the respective setting state of the mechanical switching device (SL) and the memory state of the separate marker memory (MS) is detected.

7. Circuit arrangement according to claim 6, **characterised in that** the comparison device (CPU, ROM, RAM) is a comparison device executing an EXCLUSIVE/OR function (anti-equivalence) or an equivalence function.

8. Circuit arrangement according to claim 6 or 7, **characterised in that** the said marker memory(MS) is formed by an independent non-volatile marker memory (MS) for storage of an initialisation signal from the power supply (PS) of the associated appliance (HG1).

9. Circuit arrangement according to claim 7, **characterised in that** the marker memory (MS) is a memory, particularly a semiconductor memory (MS), supplied by an own power source (U).

10. Circuit arrangement according to claim 7, **characterised in that** the marker memory (MS) is a memory storing in non-electrical manner, particularly a memory storing magnetically, optically, magneto-optically or holographically.

## Revendications

1. Procédé pour mettre en oeuvre des opérations d'initialisation resp. d'enregistrement pour un appareil, en particulier un appareil ménager, qui peut être relié à un réseau, dans lequel une première initialisation resp. enregistrement de l'appareil concerné est commandé par la délivrance d'un signal d'initialisation par ledit appareil en vue d'un actionnement d'un dispositif de commutation mécanique au moyen d'un dispositif de commande et dans lequel, dans le cadre de l'initialisation resp. de l'enregistrement mentionné, une adresse désignant clairement cet appareil dans ledit réseau est attribuée à cet appareil, **caractérisé en ce que**, après la première initialisation resp. enregistrement de l'appareil (HG1) concerné, un signal d'état de réglage correspondant à l'état de commutation du dispositif de commutation (SL) mécanique réglable dans respectivement l'une d'au moins deux positions de commutation stables est mémorisé dans une mémoire caractéristique (MS) spécifique, **en ce que**, après la mise hors service et la remise en service consécutive de l'appareil (HG1) concerné, on a dans ledit réseau (HB) un contrôle de l'état d'initialisation resp. d'enregistrement de l'appareil (HG) concerné, **en ce que** l'état de réglage dudit dispositif de commutation (SL) mécanique est comparé avec l'état de stockage de la mémoire caractéristique (MS) séparée selon une fonction d'association définie et **en ce qu'**une nouvelle initialisation resp. enregistrement de l'appareil (HG1) concerné est effectué dans ledit réseau (HB) uniquement si l'on constate la présence d'une relation d'association fixée définie entre l'état de réglage du dispositif de commutation (SL) mécanique dudit appareil (HG1) et l'état de stockage de la mémoire caractéristique (MS) séparée.

2. Procédé selon la revendication 1, **caractérisé en ce que** l'état de réglage respectif du dispositif de commutation (SL) mécanique dudit appareil (HG1) est comparé avec l'état de stockage de la mémoire caractéristique (MS) séparée selon une fonction OU EXCLUSIF (antivalence) ou selon une fonction d'équivalence.

3. Procédé selon la revendication 1 ou 2, **caractérisé en ce que** le signal d'initialisation respectivement délivré par le dispositif de commutation (SL) mécanique dudit appareil (HG1) est stocké dans une mémoire caractéristique (MS) non volatile, indépendante de l'alimentation électrique de l'appareil (HG1) concerné.

4. Procédé selon la revendication 3, **caractérisé en ce qu'**une mémoire alimentée par une source de courant (U) propre, en particulier une mémoire à semi-conducteurs (MS), est utilisée comme mémoire caractéristique (MS).

5. Procédé selon la revendication 3, **caractérisé en ce qu'**une mémoire à stockage non électrique, en particulier une mémoire à stockage magnétique, optique, magnéto-optique ou holographique, est utilisée comme mémoire caractéristique (MS).

6. Agencement de circuit pour la mise en oeuvre du procédé selon l'une quelconque des revendications 1 à 5 pour l'exécution d'opérations d'initialisation resp. d'enregistrement pour un appareil, en particulier un appareil ménager, qui peut être relié à un réseau, dans lequel une première initialisation resp. enregistrement de l'appareil concerné est commandé par la délivrance d'un signal d'initialisation par ledit appareil en vue d'un actionnement d'un dispositif de commutation mécanique au moyen d'un dispositif de commande et dans lequel, dans le cadre de l'initialisation resp. de l'enregistrement concerné, une adresse désignant clairement cet appareil audit réseau est attribuée à cet appareil, **caractérisé en ce que**, dans ledit appareil (HG1), il est prévu un dispositif de commutation (SL) mécanique réglable dans au moins deux positions de commutation stables différentes, lequel dispositif permet de délivrer des signaux d'initialisation (par exemple "0" resp. "1") différents les uns des autres dans ses positions de commutation différentes, **en ce que**, pour ledit appareil (HG1), il est prévu une mémoire caractéristique (MS) pour le stockage du signal d'initialisation respectivement délivré par l'actionnement dudit dispositif de commutation (SL) mécanique, **en ce qu'**il est prévu un dispositif de comparaison (CPU, ROM, RAM) qui effectue un contrôle de l'état d'initialisation resp. d'enregistrement de l'appareil (HG) concerné, qui permet de comparer l'état de réglage respectif du dispositif de commutation (SL) mécanique avec l'état de stockage de la mémoire caractéristique (MS) séparée avant l'exécution d'une opération d'initialisation resp. d'enregistrement pour l'appareil (HG1) concerné selon une fonction d'association définie en vue d'une mise en service et de toute remise en service de l'appareil (HG1) concerné après une interruption de service respective et **en ce qu'**un dispositif d'analyse (CPU, ROM, RAM) est prévu, lequel déclenche une nouvelle initialisation resp. enregistrement de l'appareil (HG1) concerné dans ledit réseau (HB), uniquement si on constate une certaine relation d'association fixée définie entre l'état de réglage respectif du dispositif de commutation (SL) mécanique et l'état de stockage de la mémoire caractéristique (MS) séparée.

7. Agencement de circuit selon la revendication 6, **caractérisé en ce que** le dispositif de comparaison (CPU, ROM, RAM) est un dispositif de comparaison qui effectue une fonction OU EXCLUSIF (antivalence) ou une fonction d'équivalence.

8. Agencement de circuit selon la revendication 6 ou 7, **caractérisé en ce que** ladite mémoire caractéristique (MS) est formée par une mémoire caractéristique (MS) non volatile et indépendante de l'alimentation électrique (PS) de l'appareil (HG1) spécifique pour le stockage d'un signal d'initialisation.

9. Agencement de circuit selon la revendication 7, **caractérisé en ce que** la mémoire caractéristique (MS) est une mémoire alimentée avec une source de courant (U) propre, en particulier une mémoire à semi-conducteurs (MS).

10. Agencement de circuit selon la revendication 7, **caractérisé en ce que** la mémoire caractéristique (MS) est une mémoire à stockage non électrique, en particulier une mémoire à stockage magnétique, optique, magnéto-optique ou holographique.
